# EUROPÄISCHE PATENTSCHRIFT

(11) **EP 1 980 428 B1**
(45) Veröffentlichungstag und Bekanntmachung des Hinweises auf die Patenterteilung: **05.09.2012**
(21) Anmeldenummer: 08002099.3
(22) Anmeldetag: 05.02.2008
(51) Int. Cl.: B60G 17/016

(54) **Verfahren und Vorrichtung zur Wankstabilisierung eines Kraftfahrzeugs**
Method and device for stabilising the roll of a motor vehicle
Procédé et dispositif de stabilisation de roulis d'un véhicule automobile

(30) Priorität: 12.04.2007 DE 102007017242
(43) Veröffentlichungstag der Anmeldung: 15.10.2008
(73) Patentinhaber: Dr. Ing. h.c. F. Porsche AG, 70435 Stuttgart (DE)
(72) Erfinder: Fischlein, Hartmut, 70825 Korntal-Münchingen (DE); Ferger-Andrews, Robert, 71665 Vaihingen/Enz (DE)

(56) Entgegenhaltungen:
- EP-A- 0 236 947
- EP-A- 0 246 655
- EP-A- 1 213 163
- WO-A-2006/037678
- WO-A-2007/118588
- JP-A- 5 169 948
- JP-A- 11 147 411
- JP-A- 60 191 812
- US-A- 4 974 875
- US-A- 5 046 008
- US-A1- 2002 013 645
- US-A1- 2004 176 890

## Beschreibung

Die Erfindung betrifft ein Verfahren zur Wankstabilisierung eines Kraftfahrzeugs nach dem Oberbegriff des Anspruchs 1. Des Weiteren betrifft die Erfindung eine Vorrichtung zur Wankstabilisierung eines Kraftfahrzeugs nach dem Oberbegriff des Anspruchs 15.

Das Fahrverhalten eines Kraftfahrzeugs wird durch eine Vielzahl von Kräften und Momenten bestimmt, die in Richtung von Kraftfahrzeugachsen, nämlich in Richtung einer Längsachse, einer Querachse, einer Hochachse sowie einer Wankachse, auf das Kraftfahrzeug einwirken. Unter der Wankachse wird eine Achse verstanden, die sich durch die Wankzentren von Vorderachse sowie Hinterachse des Kraftfahrzeugs erstreckt. Eine Rollbewegung des Kraftfahrzeugs um die Wankachse bezeichnet man als Wanken. Zur Bereitstellung eines guten Fahrverhaltens eines Kraftfahrzeugs ist es aus dem Stand der Technik bereits bekannt, an einem Kraftfahrzeug eine Wankstabilisierung durchzuführen, wobei bei einer Wankstabilisierung auf Grundlage des Fahrzustands, gekennzeichnet beispielsweise durch eine gemessene Querbeschleunigung des Kraftfahrzeugs oder eine berechnete Querbeschleunigung des Kraftfahrzeugs, Stellsignale für Aktuatoren erzeugt werden, die der Vorderachse und der Hinterachse des Kraftfahrzeugs zugeordnet sind, und die an der Vorderachse und/oder an der Hinterachse zur Wankstabilisierung Abstützmomente bereitstellen. Bei den Aktuatoren handelt es sich typischerweise um hydraulisch verstellbare Stabilisatoren, die durch Ventilblöcke angesteuert werden können. Die Ventilblöcke erhalten ihre Stellsignale von einer Steuerungs- bzw. Regelungseinrichtung, die auf Grundlage der gemessenen oder berechneten Querbeschleunigung des Kraftfahrzeugs die Stellsignale generiert.

Bei einer aus der Praxis bekannten Wankstabilisierung werden, wie bereits erwähnt, an der Vorderachse und/oder an der Hinterachse zur Wankstabilisierung Abstützmomente bereitgestellt, wobei eine Momentverteilung zwischen dem an der Vorderachse bereitgestellten Abstützmoment und dem an der Hinterachse bereitgestellten Abstützmoment das sogenannte Eigenlenkverhalten eines Kraftfahrzeugs beeinflusst.

Dann, wenn das Kraftfahrzeug Lastwechseln ausgesetzt ist, kann sich das Eigenlenkverhalten des Kraftfahrzeugs verändern, so dass ein gewünschtes und kundentaugliches Fahrverhalten des Kraftfahrzeugs nicht mehr gewährleistet werden kann.

Die Schriften JP-A-05-05169948, EP-A-1213163, EP-A-0236 947, EP-A-0246 655 , US-A-4974875 offenbaren jeweils ein Verfahren zur Wankstabilisierung eines Karftfahrzeugs nach dem Oberbegriff des Anspruchs 1. In der US-A- 2002/0013645, JP-A11 147 411 und JP-A- 60 191812 werden andere Verfahren zur Warkstabilisierung eines kraftfahrzeuges offenbart.

In JP-A-05169948 wird eine aktive Radaufhängung beschrieben, wobei zur Verstärkung des Untersteuer-Verhaltens und zur Erhöhung der Stabilität in Kurven eine Regelvorrichtung zur Veränderung der Lastverteilung zwischen vorderer und hinterer Last zwischen den rechten und linken Rädern vorgesehen ist, wobei diese Veränderung abhängig von der Geschwindigkeit erfolgt, wenn das Fahrzeug in einen Bremszustand überführt wird.

Hiervon ausgehend liegt der vorliegenden Erfindung das Problem zu Grunde ein neuartiges Verfahren sowie eine neuartige Vorrichtung zur Wankstabilisierung eines Kraftfahrzeugs zu schaffen.

Dieses Problem wird durch ein Verfahren zur Wankstabilisierung eines Kraftfahrzeugs gemäß Anspruch 1 gelöst. Erfindungsgemäß wird zur Gewährleistung eines guten Eigenlenkverhaltens des Kraftfahrzeugs abhängig von einem ersten Signal, welches Rückschlüsse über die Betätigung eines Gaspedals bzw. über eine Schleppmomentenerhöhung zulässt, und/oder abhängig von einem zweiten Signal, welches Rückschlüsse über die Betätigung eines Bremspedals zulässt, eine Momentverteilung zwischen dem an der Vorderachse bereitstellten Abstützmoment und dem an der Hinterachse bereitstellten Abstützmoment verändert.

Im Sinne der hier vorliegenden Erfindung wird erstmals ein Verfahren zur Wankstabilisierung eines Kraftfahrzeugs vorgeschlagen, bei welchem zur Gewährleistung eines guten Eigenlenkverhaltens des Kraftfahrzeugs abhängig von der Betätigung des Gaspedals, abhängig vom Schleppmoment und/oder von der Betätigung des Bremspedals die Momentverteilung zwischen dem an der Vorderachse bereitgestellten Abstützmoment und dem an der Hinterachse bereitgestellten Abstützmoment verändert wird. Um demnach einer unerwünschten Änderung des Eigenlenkverhaltens bei einem Lastwechsel entgegenzuwirken, wird im Sinne der hier vorliegenden Erfindung die Momentverteilung zwischen den Fahrzeugachsen in Abhängigkeit von der Gaspedalbetätigung und/oder Bremspedalbetätigung verändert. Hierdurch kann ein gutes Eigenlenkverhalten des Kraftfahrzeugs gewährleistet werden.

Erfindungsgemäß wird im regulären Fahrbetrieb eine erste Momentverteilung zwischen dem an der Vorderachse bereitstellten Abstützmoment und dem an der Hinterachse bereitstellten Abstützmoment verwendet, wobei dann, das erste Signal einen Rückschluss zulässt, dass die Gaspedalstellung bzw. das Schleppmoment einen Grenzwert unterschreitet oder überschreitet, und/oder das erste Signal einen Rückschluss zulässt, dass die Gaspedalbetäügungsgeschwindigkeit bzw. die Schleppmomentengeschwindigkeit oder die Gaspedalbetätigungsbeschleunigung bzw. die Schleppmomentenbeschleunigung einen Grenzwert überschreitet, und/oder das zweite Signal einen Rückschluss zulässt, dass das Bremspedal betätigt ist, eine zweite Momentverteilung verwendet wird, bei der im Vergleich zur ersten Momentverteilung das an der Vorderachse bereitstellte Abstützmoment größer ist.

Diese zweite Momentverteilung wird erfindungsgemäß für eine definierte Zeitdauer gehalten, wobei im Anschluss an die definierte Zeitdauer eine dritte Momentverteilung verwendet wird, bei der vorzugsweise im Vergleich zur zweiten Momentverteilung das an der Vorderachse bereitstellte Abstützmoment kleiner ist. Diese Zeitdauer kann konstant gewählt sein oder beispielsweise abhängig sein vom Schleppmoment und/oder vom Fahrzustand.

Die erfindungsgemäße Vorrichtung zur Wankstabilisierung eines Kraftfahrzeugs ist in Anspruch 13 definiert.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1: ein Blockschaltbild einer erfindungsgemäßen Vorrichtung zur Wankstabilisierung eines Kraftfahrzeugs; und
- Fig. 2: ein Diagramm zur Verdeutlichung des erfindungsgemäßen Verfahrens zur Wankstabilisierung eines Kraftfahrzeugs.

Die hier vorliegende Erfindung betrifft eine Vorrichtung und ein Verfahren zur Wankstabilisierung eines Kraftfahrzeugs, wobei unter dem Wanken eine Kippbewegung des Kraftfahrzeugs um eine Wankachse desselben verstanden wird. Bei der Wankachse handelt es sich um eine Achse, die sich durch das Wankzentrum der Vorderachse sowie das Wankzentrum der Hinterachse des Kraftfahrzeugs erstreckt. Bei einem Wankzentrum einer Achse handelt es sich um den Punkt auf einer in der Achsmitte gedachten Senkrechten, um den sich der Fahrzeugaufbau unter Einwirkung von Seitenkräften zu Kippen beginnt.

Eine Vorrichtung zur Wankstabilisierung umfasst der Vorderachse und/oder Hinterachse zugeordnete Aktuatoren, die an der Vorderachse und an der Hinterachse Abstützmomente zur Wankstabilisierung bereitstellen, nämlich abhängig vom Fahrzustand, gekennzeichnet z.B. von einer gemessenen Querbeschleunigung bzw. Gierrate oder einer berechneten Querbeschleunigung bzw. Gierrate des Kraftfahrzeugs. Eine Vorrichtung zur Wankstabilisierung ist dabei vorzugsweise als hydraulisches System ausgeführt, wobei dann die der Vorderachse sowie der Hinterachse zugeordneten Aktuatoren als hydraulisch verstellbare Stabilisatoren ausgeführt sind, die über Ventilblöcke angesteuert werden können. Eine Vorrichtung zur Wankstabilisierung kann beispielsweise auch als elektrisches oder elektro-hydraulisches System ausgeführt sein. Die Stabilisatoren können beispielsweise auch elektrisch verstellbar ausgeführt sein.

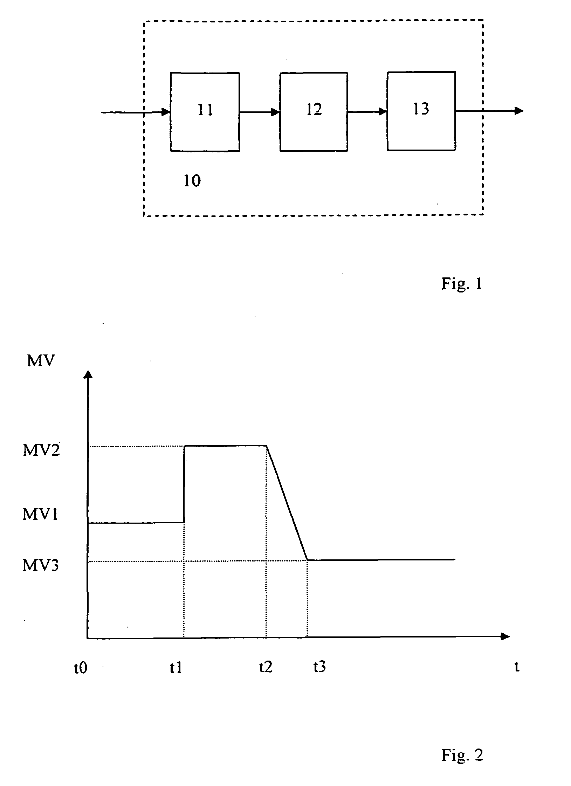

Stellsignale zur Ansteuerung der Ventilblöcke werden von einer Steuerungs- bzw. Regelungseinrichtung bereitgestellt, nämlich auf Grundlage der gemessenen Querbeschleunigung bzw. Gierrate oder der berechneten Querbeschleunigung bzw. Gierrate des Kraftfahrzeugs. Fig. 1 zeigt einen Ausschnitt aus einer Vorrichtung zur Wankstabilisierung, nämlich eine Steuerungs- bzw. Regelungseinrichtung 10, der als Eingangsgröße zumindest die gemessene Querbeschleunigung und/oder Gierrate oder berechnete Querbeschleunigung und/oder Gierrate des Kraftfahrzeugs zugeführt wird, und die als Ausgangsgröße Stellbefehle für die Aktuatoren, insbesondere für Ventilblöcke hydraulisch verstellbarer Stabilisatoren ausgibt. Der Steuerungs- bzw. Regelungseinrichtung 10 wird vorzugsweise auch der Wankwinkel als Eingangsgröße zugeführt.

Gemäß Fig. 1 umfasst die Steuerungs- bzw. Regelungseinrichtung drei Hauptkomponenten, nämlich eine Vorsteuereinrichtung 11, eine Regeleinrichtung 12 sowie eine Einrichtung 13 zur Bestimmung einer Momentverteilung zwischen einem an der Vorderachse bereitgestellten Abstützmoment und einem an der Hinterachse bereitgestellten Abstützmoment. Die Vorsteuereinrichtung 11 generiert aus der gemessenen Querbeschleunigung bzw. Gierrate oder der berechneten Querbeschleunigung bzw. Gierrate des Kraftfahrzeugs eine Vorsteuerkomponente zur Wankstabilisierung, wobei die Regeleinrichtung 12 ungenaue Vorgaben der Vorsteuerung durch eine Regelung korrigiert.

Auf Grundlage der Vorsteuerung über die Vorsteuereinrichtung 11 sowie der Regelung über die Regeleinrichtung 12 bestimmt die Einrichtung 13 eine Momentverteilung zwischen dem an der Vorderachse bereitgestellten Abstützmoment und dem an der Hinterachse bereitgestellten Abstützmoment zur Wankstabilisierung des Kraftfahrzeugs. Die hier vorliegende Erfindung betrifft nun Details der Einrichtung 13, mit denen erzielt werden kann, dass trotz Lastwechseln unerwünschte Änderungen des Eigenlenkverhaltens des Kraftfahrzeugs vermieden werden können.

Im Sinne der hier vorliegenden Erfindung wird zur Vermeidung einer unerwünschten Änderung des Eigenlenkverhaltens des Kraftfahrzeugs bei Lastwechseln und damit zur Gewährleistung eines guten Eigenlenkverhaltens des Kraftfahrzeugs abhängig von einem ersten Signal, welches Rückschlüsse über die Betätigung des Gaspedals bzw. über das Schleppmoment des Kraftfahrzeugs zulässt, und/oder abhängig von einem zweiten Signal, welches Rückschlüsse über die Betätigung eines Bremspedals des Kraftfahrzeugs zulässt, eine Momentverteilung zwischen dem an der Vorderachse bereitgestellten Abstützmoment und dem an der Hinterachse bereitgestellten Abstützmoment verändert.

Diese Veränderung wird nachfolgend unter Bezugnahme auf Fig. 2 in größerem Detail beschrieben.

In Fig. 2 ist exemplarisch eine mit der hier vorliegenden Erfindung erzielbar Veränderung der Momentverteilung zwischen dem an der Vorderachse bereitgestellten Abstützmoment und dem an der Hinterachse bereitgestellte Abstützmoment dargestellt, wobei auf der horizontal verlaufenden Achse die Zeit t und auf der vertikal verlaufenden Achse die Momentverteilung MV aufgetragen ist, wobei es sich bei der Momentverteilung MV um das Verhältnis aus dem an der Vorderachse bereitgestellten Abstützmoment und dem an der Hinterachse bereitgestellten Abstützmoment handelt. Je größer die Momentverteilung MV ist, desto größer ist das an der Vorderachse bereitgestellte Abstützmoment im Verhältnis zu dem an der Hinterachse bereitgestellten Abstützmoment.

Im regulären Fahrbetrieb stellt die Einrichtung 13 eine erste Momentverteilung zwischen dem an der Vorderachse bereitgestellten Abstützmoment und dem an der Hinterachse bereitgestellten Abstützmoment bereit. Diese erste Momentverteilung ist in Fig. 2 als MV1 dargestellt, die zwischen den Zeitpunkten t0 und t1 von der Einrichtung 13 bereitgestellt bzw. zur Wankstabilisierung verwendet wird.

Dann, wenn das erste Signal einen Rückschluss zulässt, dass die Gaspedalstellung bzw. das Schleppmoment einen Grenzwert unterschreitet oder überschreitet, und/oder dann, wenn das erste Signal einen Rückschluss zulässt, dass die Gaspedalbetätigungsgeschwindigkeit bzw. das Schleppmoment und/oder die Gaspedalbetätigungsbeschleunigung einen Grenzwert überschreitet, und/oder dann, wenn das zweite Signal einen Rückschluss zulässt, dass das Bremspedal betätigt ist, wird von der Einrichtung 13 eine zweite Momentverteilung verwendet bzw. bereitgestellt, bei der im Vergleich zur ersten Momentverteilung das an der Vorderachse bereitgestellte Abstützmoment größer ist. In Fig. 2 ist diese zweite Momentverteilung als MV2 visualisiert.

Gemäß Fig. 2 erfolgt der Übergang von der ersten Momentverteilung MV1 auf die zweite Momentverteilung MV2 diskontinuierlich, nämlich sprungartig in einer Stufe Der Übergang kann auch kontinuierlich gemäß einer beliebigen definierten Funktion erfolgen. Die zweite Momentverteilung MV2 wird für eine definierte Zeitdauer gehalten, nämlich für die Zeitdauer, die zwischen den Zeitpunkten t1 und t2 liegt.

Diese Zeitdauer beträgt insbesondere einige Sekunden. Die prozentuale Erhöhung zwischen den Momentverteilungen MV1 und MV2 beträgt zwischen 2 und 5 Prozent, vorzugsweise zwischen 3 und 4 Prozent.

Im Anschluss an die definierte Zeitdauer, für die die zweite Momentverteilung MV2 gehalten wird, wird von der Einrichtung 13 eine dritte Momentverteilung bereitgestellt bzw. verwendet, wobei bei der dritten Momentverteilung im Vergleich zur zweiten Momentverteilung das an der Vorderachse bereitgestellte Abstützmoment kleiner ist.

Bei dieser dritten Momentverteilung handelt es sich in Fig. 2 um die Momentverteilung MV3, die ab dem Zeitpunkt t3 gilt, wobei gemäß Fig. 2 zwischen den Zeitpunkten t2 und t3 der Übergang von der zweiten Momentverteilung MV2 auf die dritte Momentverteilung MV3 kontinuierlich, nämlich linear, erfolgt. Der Übergang von der zweiten Momentverteilung MV2 auf die dritte Momentverteilung MV3 kann nach einer beliebigen Funktion erfolgen.

Bei der dritten Momentverteilung MV3 ist im gezeigten Ausführungsbeispiel im Vergleich zur ersten Momentverteilung MV1 dass an der Vorderachse bereitgestellte Abstützmoment kleiner. Es ist jedoch auch möglich, dass das mit der dritten Momentverteilung MV3 an der Vorderachse bereitgestellte Abstützmoment im Vergleich zur ersten Momentverteilung MV1 größer ist oder gleich ist.

Als erstes Signal, welches Rückschlüsse über die Betätigung des Gaspedals bzw. über das Schleppmoment, insbesondere über die Gaspedalstellung bzw. das Schleppmoment oder die Gaspedalbetätigungsgeschwindigkeit bzw. den Schleppmomentenaufbau oder die Gaspedalbeschleunigung bzw. die Schleppmomentaufbaubeschleunigung, zulässt, kann ein Signal verwendet werden, welches ein Gaspedalsensors bereitstellt, der unmittelbar das Gaspedal überwacht. Alternativ ist es auch möglich, als Signal, welches Rückschlüsse über die Betätigung des Gaspedals zulässt, ein Signal über eine Drosselklappenstellung oder ein Signal über eine Motormomentanforderung zu verwenden.

Als zweites Signal, welches Rückschlüsse über die Betätigung des Bremspedals zulässt, wird vorzugsweise ein Bremspedalsignal verwendet, welches von einem dem Bremspedal zugeordneten Sensor bereitgestellt wird.

Es liegt demnach im Sinne der hier vorliegenden Erfindung, zur Vermeidung einer unerwünschten Änderung des Eigenlenkverhaltens im Fall eines Lastwechsels bei einer Wankstabilisierung die Momentverteilung zwischen dem an der Vorderachse bereitgestellten Abstützmoment und dem an der Hinterachse bereitgestellten Abstützmoment in Abhängigkeit von der Gaspedalbetätigung und/oder der Bremspedalbetätigung zu verändern.

Die Veränderung der Momentverteilung zwischen dem an der Vorderachse bereitgestellten Abstützmoment und dem an der Hinterachse bereitgestellten Abstützmoment erfolgt derart, dass dann, wenn das Bremspedal betätigt wird und/oder eine definierte Gaspedalstellung unterschritten oder überschritten wird und/oder eine Gaspedalbetätigungsgeschwindigkeit bzw. eine Gaspedalbetätigungsbeschleunigung überschritten wird, die Momentverteilung zur Vorderachse hin verschoben wird, und zwar für eine definierte Zeitspanne, in der diese veränderte Momentverteilung gehalten wird. Im Anschluss an diese Zeitspanne wird die Momentverteilung wieder in Richtung zur Hinterachse verschoben.

Abschließend sei darauf hingewiesen, dass die Momentverteilungen MV1, MV2 und MV3 vorzugsweise konstante Momentverteilungen sind. Es ist jedoch auch möglich, dass es sich insbesondere bei der Momentverteilung MV1 um eine fahrsituationsabhängige, insbesondere fahrgeschwindigkeitsabhängige, Momentverteilung handelt. Ebenso können die Momentverteilungen MV2 und MV3 fahrsituationsabhängig sein.

### Bezugszeichenliste

- 10: Steuerungs- bzw. Regelungseinrichtung
- 11: Vorsteuereinrichtung
- 12: Regeleinrichtung
- 13: Einrichtung zur Bestimmung einer Momentverteilung

## Patentansprüche

1. Verfahren zur Wankstabilisierung eines Kraftfahrzeugs, wobei auf Grundlage einer gemessenen Querbeschleunigung oder einer berechneten Querbeschleunigung des Kraftfahrzeugs Stellsignale für einer Vorderachse und einer Hinterachse des Kraftfahrzeugs zugeordnete Aktuatoren erzeugt werden, die an der Vorderachse und/oder an der Hinterachse zur Wankstabilisierung Abstützmomente bereitstellen, wobei zur Gewährleistung eines guten Eigenlenkverhaltens des Kraftfahrzeugs abhängig von einem ersten Signal, welches Rückschlüsse über die Betätigung eines Gaspedals zulässt, und/oder abhängig von einem zweiten Signal, welches Rückschlüsse über die Betätigung eines Bremspedals zulässt, eine Momentverteilung zwischen dem an der Vorderachse bereitstellten Abstützmoment und dem an der Hinterachse bereitstellten Abstützmoment verändert wird, wobei im regulären Fahrbetrieb eine erste Momentverteilung zwischen dem an der Vorderachse bereitstellten Abstützmoment und dem an der Hinterachse bereitstellten Abstützmoment verwendet wird, **dadurch gekennzeichnet, dass** dann, wenn das erste Signal einen Rückschluss zulässt, dass die Gaspedalstellung einen Grenzwert unterschreitet, eine zweite Momentverteilung verwendet wird, bei der im Vergleich zur ersten Momentverteilung das an der Vorderachse bereitgestellte Abstützmoment größer ist, dass die zweite Momentverteilung für eine definierte Zeitdauer gehalten wird, und dass im Anschluss an die definierte Zeitdauer eine dritte Momentverteilung verwendet wird, wobei der Übergang von der zweiten Momentverteilung auf die dritte Momentverteilung kontinuierlich, insbesondere linear, erfolgt.

2. Verfahren nach Anspruch 1, **dadurch gekennzeichnet, dass** dann, wenn das erste Signal einen Rückschluss zulässt, dass die Gaspedalstellung einen Grenzwert überschreitet, eine zweite Momentverteilung verwendet wird, bei der im Vergleich zur ersten Momentverteilung das an der Vorderachse bereitgestellte Abstützmoment größer ist.

3. Verfahren nach Anspruch 1 oder 2, **dadurch gekennzeichnet, dass** dann, wenn das erste Signal einen Rückschluss zulässt, dass die Gaspedalbetätigungsgeschwindigkeit oder die Gaspedalbetätigungsbeschleunigung einen Grenzwert überschreitet, eine zweite Momentverteilung verwendet wird, bei der im Vergleich zur ersten Momentverteilung das an der Vorderachse bereitstellte Abstützmoment größer ist.

4. Verfahren nach einem der Ansprüche 1 bis 3, **dadurch gekennzeichnet, dass** dann, wenn das zweite Signal einen Rückschluss zulässt, dass das Bremspedal betätigt ist, eine zweite Momentverteilung verwendet wird, bei der im Vergleich zur ersten Momentverteilung das an der Vorderachse bereitstellte Abstützmoment größer ist.

5. Verfahren nach einem der Ansprüche 1 bis 4, **dadurch gekennzeichnet, dass** der Übergang von der ersten Momentverteilung auf die zweite Momentverteilung diskontinuierlich, insbesondere sprungartig in einer Stufe, erfolgt.

6. Verfahren nach einem der Ansprüche 1 bis 5, **dadurch gekennzeichnet, dass** der Übergang von der ersten Momentverteilung auf die zweite Momentverteilung kontinuierlich erfolgt.

7. Verfahren nach einem der Ansprüche 1 bis 6, **dadurch gekennzeichnet, dass** im Anschluss an die definierte Zeitdauer eine dritte Momentverteilung verwendet wird, bei der im Vergleich zur zweiten Momentverteilung das an der Vorderachse bereitstellte Abstützmoment kleiner ist.

8. Verfahren nach einem der Ansprüche 1 bis 6, **dadurch gekennzeichnet, dass** im Anschluss an die definierte Zeitdauer eine dritte Momentverteilung verwendet wird, bei der im Vergleich zur ersten Momentverteilung das an der Vorderachse bereitstellte Abstützmoment kleiner ist.

9. Verfahren nach einem der Ansprüche 1 bis 6, **dadurch gekennzeichnet, dass** im Anschluss an die definierte Zeitdauer eine dritte Momentverteilung verwendet wird, bei der im Vergleich zur ersten Momentverteilung das an der Vorderachse bereitstellte Abstützmoment größer ist.

10. Verfahren nach einem der Ansprüche 1 bis 6, **dadurch gekennzeichnet, dass** im Anschluss an die definierte Zeitdauer eine dritte Momentverteilung verwendet wird, bei der im Vergleich zur ersten Momentverteilung das an der Vorderachse bereitstellte Abstützmoment gleich ist.

11. Verfahren nach einem der Ansprüche 1 bis 10, **dadurch gekennzeichnet, dass** als erstes Signal, welches Rückschlüsse über die Betätigung des Gaspedals zulässt, ein Gaspedalsignal oder ein Drosselklappensignal oder ein Motormomentanforderungssignal verwendet wird.

12. Verfahren nach einem der Ansprüche 1 bis 11, **dadurch gekennzeichnet, dass** als zweites Signal, welches Rückschlüsse über die Betätigung des Bremspedals zulässt, ein Bremspedalsignal verwendet wird.

13. Vorrichtung zur Wankstabilisierung eines Kraftfahrzeugs, mit einer Einrichtung zur Messung oder Berechnung einer Querbeschleunigung des Kraftfahrzeugs, und mit einer Steuerungs- bzw. Regelungseinrichtung, die auf Grundlage der gemessenen oder berechneten Querbeschleunigung Stellsignale für einer Vorderachse und einer Hinterachse des Kraftfahrzeugs zugeordnete Aktuatoren erzeugt werden, die an der Vorderachse und/oder an der Hinterachse zur Wankstabilisierung Abstützmomente bereitstellen, **dadurch gekennzeichnet, dass** die Steuerungs- bzw. Regelungseinrichtung (10) eine Einrichtung (13) zur Bestimmung einer Momentverteilung zwischen dem an der Vorderachse bereitstellten Abstützmoment und dem an der Hinterachse bereitstellten Abstützmoment im Sinne des Verfahrens nach einem oder mehreren der Ansprüche 1 bis 12 umfasst.

## Claims

1. Method for roll stabilization of a motor vehicle, wherein actuation signals for actuators which are assigned to a front axle and a rear axle of the motor vehicle, and which make available supporting torques at the front axial and/or at the rear axial for the purpose of roll stabilization, are generated on the basis of a measured lateral acceleration or a calculated lateral acceleration of the motor vehicle, wherein, in order to ensure good self-steering behaviour of the motor vehicle a torque distribution between the supporting torque made available at the front axial and the supporting torque made available at the rear axial is changed as a function of a first signal which permits conclusions to be drawn about the activation of an accelerator pedal and/or as a function of a second signal which permits conclusions to be drawn about the activation of a brake pedal, wherein in the normal driving mode a first torque distribution between the supporting torque made available at the front axial and the supporting torque made available at the rear axial is used, **characterized in that** when the first signal permits a conclusion that the accelerator pedal position undershoots a limiting value, a second torque distribution is used with which the supporting torque made available at the front axial is larger compared to the first torque distribution, **in that** the second torque distribution is maintained for a defined time period, and **in that** subsequent to the defined time period, a third torque distribution is used, wherein the transition from the second torque distribution to the third torque distribution takes place continuously, in particular linearly.

2. Method according to Claim 1, **characterized in that** when the first signal permits a conclusion that the accelerator pedal position exceeds a limiting value, a second torque distribution is used with which the supporting torque made available at the front axial is larger compared to the first torque distribution.

3. Method according to Claim 1 or 2, **characterized in that** when the first signal permits a conclusion that the activation speed of the accelerator pedal or the acceleration of the activation of the accelerator pedal exceeds a limiting value, a second torque distribution is used with which the supporting torque made available at the front axial is larger compared to the first torque distribution.

4. Method according to one of Claims 1 to 3, **characterized in that** when the second signal permits a conclusion that the brake pedal is actuated, a second torque distribution is used with which the supporting torque made available at the front axial is larger compared to the first torque distribution.

5. Method according to one of Claims 1 to 4, **characterized in that** the transition from the first torque distribution to the second torque distribution takes place discontinuously, in particular suddenly in one step.

6. Method according to one of Claims 1 to 5, **characterized in that** the transition from the first torque distribution to the second torque distribution takes place continuously.

7. Method according to one of Claims 1 to 6, **characterized in that** subsequent to the defined time period, a third torque distribution is used with which the supporting torque made available at the front axial is smaller compared to the second torque distribution.

8. Method according to one of Claims 1 to 6, **characterized in that** subsequent to the defined time period, a third torque distribution is used with which the supporting torque made available at the front axial is smaller compared to the first torque distribution.

9. Method according to one of Claims 1 to 6, **characterized in that** subsequent to the defined time period, a third torque distribution is used with which the supporting torque made available at the front axial is larger compared to the first torque distribution.

10. Method according to one of Claims 1 to 6, **characterized in that** subsequent to the defined time period, a third torque distribution is used with which the supporting torque made available at the front axial is the same compared to the first torque distribution.

11. Method according to one of Claims 1 to 10, **characterized in that** an accelerator pedal signal or a throttle valve signal or an engine torque request signal is used as a first signal which permits conclusions to be drawn about the activation of the accelerator pedal.

12. Method according to one of Claims 1 to 11, **characterized in that** a brake pedal signal is used as a second signal which permits conclusions to be drawn about the activation of the brake pedal.

13. Device for performing roll stabilization of a motor vehicle, having a device for measuring or calculating a lateral acceleration of the motor vehicle, and having an open-loop or closed-loop control device which generates, on the basis of the measured or calculated lateral acceleration, actuation signals for actuators which are assigned to a front axial and a rear axial of the motor vehicle and which make available supporting torques at the front axial and/or at the rear axial for the purpose of roll stabilization, **characterized in that** the open-loop or closed-loop control device (10) comprises a device (13) for determining a torque distribution between the supporting torque made available at the front axial and the supporting torque made available at the rear axial, in accordance with the method according to one or more of Claims 1 to 12.

## Revendications

1. Procédé de stabilisation de roulis d'un véhicule automobile, des signaux de réglage des actionneurs associés à un essieu avant et à un essieu arrière du véhicule automobile étant produits sur la base d'une accélération transversale mesurée ou d'une accélération transversale calculée du véhicule automobile, lesdits actionneurs mettant à disposition des couples de soutien au niveau de l'essieu avant et/ou de l'essieu arrière pour la stabilisation du roulis, une répartition du couple entre le couple de soutien mis à disposition au niveau de l'essieu avant et le couple de soutien mis à disposition au niveau de l'essieu arrière étant modifiée pour garantir un bon comportement de braquage propre du véhicule automobile en fonction d'un premier signal autorisant des déductions sur l'actionnement d'une pédale d'accélération et/ou en fonction d'un deuxième signal autorisant des déductions sur l'actionnement d'une pédale de frein, une première répartition du couple entre le couple de soutien mis à disposition au niveau de l'essieu avant et le couple de soutien mis à disposition de l'essieu arrière étant utilisée dans le mode de fonctionnement de conduite standard, **caractérisé en ce que** lorsque le premier signal admet une déduction selon laquelle la position de pédale d'accélération passe en dessous d'une valeur limite, une deuxième répartition du couple est utilisée dans laquelle le couple de soutien mis à disposition au niveau de l'essieu avant est supérieur à celui de la première répartition du couple, **en ce que** la deuxième répartition du couple est maintenue pendant une durée définie et qu'immédiatement après écoulement de la durée définie, une troisième répartition du couple est utilisée, la transition de la deuxième répartition du couple à la troisième répartition du couple se produisant de façon continue, notamment linéaire.

2. Procédé selon la revendication 1, **caractérisé en ce que** lorsque le premier signal admet une déduction selon laquelle la position de pédale d'accélération dépasse une valeur limite, une deuxième répartition du couple est utilisée dans laquelle le couple de soutien mis à disposition au niveau de l'essieu avant est supérieur à celui de la première répartition du couple.

3. Procédé selon la revendication 1 ou 2, **caractérisé en ce que** lorsque le premier signal admet une déduction selon laquelle la vitesse d'actionnement de la pédale d'accélération ou l'accélération d'actionnement de la pédale d'accélération dépasse une valeur limite, une deuxième répartition du couple est utilisée dans laquelle le couple de soutien mis à disposition au niveau de l'essieu avant est supérieur à celui de la première répartition du couple.

4. Procédé selon l'une quelconque des revendications 1 à 3, **caractérisé en ce que** lorsque le deuxième signal admet une déduction selon laquelle la pédale de frein est actionnée, une deuxième répartition du couple est utilisée dans laquelle le couple de soutien mis à disposition au niveau de l'essieu avant est supérieur à celui de la première répartition du couple.

5. Procédé selon l'une quelconque des revendications 1 à 4, **caractérisé en ce que** la transition de la première répartition du couple à la deuxième répartition du couple se produit de façon discontinue, notamment par à-coups dans un étage.

6. Procédé selon l'une quelconque des revendications 1 à 5, **caractérisé en ce que** la transition de la première répartition du couple à la deuxième répartition du couple se produit de façon continue.

7. Procédé selon l'une quelconque des revendications 1 à 6, **caractérisé en ce que** immédiatement après écoulement de la durée définie, une troisième répartition du couple est utilisée dans laquelle le couple de soutien mis à disposition au niveau de l'essieu avant est inférieur à celui de la deuxième répartition du couple.

8. Procédé selon l'une quelconque des revendications 1 à 6, **caractérisé en ce qu'**immédiatement après écoulement de la durée définie, une troisième répartition du couple est utilisée dans laquelle le couple de soutien mis à disposition au niveau de l'essieu avant est inférieur à celui de la première répartition du couple.

9. Procédé selon l'une quelconque des revendications 1 à 6, **caractérisé en ce qu'**immédiatement après écoulement de la durée définie, une troisième répartition du couple est utilisée dans laquelle le couple de soutien mis à disposition au niveau de l'essieu avant est supérieur à celui de la première répartition du couple.

10. Procédé selon l'une quelconque des revendications 1 à 6, **caractérisé en ce qu'**immédiatement après écoulement de la durée définie, une troisième répartition du couple est utilisée dans laquelle le couple de soutien mis à disposition au niveau de l'essieu avant est identique à celui de la première répartition du couple.

11. Procédé selon l'une quelconque des revendications 1 à 10, **caractérisé en ce que** le premier signal utilisé admettant des déductions sur l'actionnement de la pédale d'accélération est un signal de pédale d'accélération ou un signal de papillon ou un signal de demande de couple moteur.

12. Procédé selon l'une quelconque des revendications 1 à 11, **caractérisé en ce que** le deuxième signal utilisé admettant des déductions sur l'actionnement de la pédale de frein est un signal de pédale de frein.

13. Dispositif de stabilisation de roulis d'un véhicule automobile équipé d'un dispositif de mesure ou de calcul d'une accélération transversale du véhicule automobile et d'un dispositif de commande et/ou de réglage qui produit, sur la base de l'accélération transversale mesurée ou calculée, des signaux de réglage pour des actionneurs associés à un essieu avant et à un essieu arrière du véhicule automobile et qui mettent à disposition des couples de soutien au niveau de l'essieu avant et/ou de l'essieu arrière pour la stabilisation du roulis, **caractérisé en ce que** le dispositif de commande et/ou de réglage (10) comprend un dispositif (13) servant à déterminer une répartition du couple entre le couple de soutien mis à disposition au niveau de l'essieu avant et le couple de soutien mis à disposition au niveau de l'essieu arrière dans le sens du procédé selon l'une quelconque des revendications 1 à 12 ou plusieurs d'entre elles.
